# EUROPEAN PATENT APPLICATION

(11) **EP 4 299 641 A1**
(43) Date of publication of application: **03.01.2024**
(21) Application number: 22759673.1
(22) Date of filing: 22.02.2022
(51) Int. Cl.: C08F 265/06, C08L 51/04, C08L 75/04

(54) **POLYURETHANE RESIN COMPOSITION SUITABLE FOR EXTRUSION MOLDING**

(30) Priority: 26.02.2021 JP 2021029529
(71) Applicant: Kuraray Co., Ltd., Kurashiki-shi, Okayama 710-0801 (JP)
(72) Inventor: NOMOTO, Yusaku, Tainai-shi, Niigata 959-2691 (JP); ZHOU, Yantao, Tainai-shi, Niigata 959-2691 (JP)
(74) Representative: Müller-Boré & Partner Patentanwälte PartG mbB
(86) International application number: PCT/JP2022/007387
(87) International publication number: WO 2022/181638

(57) **Abstract**

Provided is a polyurethane resin composition comprising 20 to 99 parts by mass of a thermoplastic polyurethane elastomer (A) and 1 to 80 parts by mass of multilayered polymer particles (B), the multilayered polymer particles (B) satisfying the following conditions (1) to (6): (1) the multilayered polymer particles (B) comprise two or more layers having at least one rubber component layer (I) inside and at least one thermoplastic resin component layer (II) in an outermost part, (2) the rubber component layer (I) is a polymer layer formed by copolymerizing a monomer mixture (i) comprising 50 to 99.99 mass% of an acrylic acid ester, 49.99 to 0 mass% of an additional monofunctional monomer copolymerizable with the acrylic acid ester, and 0.01 to 10 mass% of a polyfunctional monomer, (3) the thermoplastic resin component layer (II) is a polymer layer formed by polymerizing a monomer (ii) comprising 40 to 100 mass% of a methacrylic acid ester and 60 to 0 mass% of an additional monomer copolymerizable with the methacrylic acid ester, (4) of the thermoplastic resin component layer (II), a polymer of the outermost layer has a number average molecular weight measured by a GPC method of 30,000 or less, (5) the total mass ratio [(I)/(II)] of the rubber component layer (I) to the thermoplastic resin component layer (II) is 30/70 to 90/10, and (6) the multilayered polymer particles (B) have an average particle size of 150 nm or less; and the melt viscosity ratio ηr of the melt viscosity η(A) of the thermoplastic polyurethane elastomer (A) at a shear rate of 121.6 sec⁻¹ to the melt viscosity η of the polyurethane resin composition at a shear rate of 121.6 sec⁻¹ satisfying the following relationships: melt viscosity ratio ηr (180°C) at 180°C: η(A)/η>1.0, melt viscosity ratio ηr (200°C) at 200°C: η(A)/η<1.0

## Description

### Technical Field

The present invention relates to a polyurethane resin composition comprising a thermoplastic polyurethane elastomer and multilayered polymer particles, and having excellent extrusion moldability.

### Background Art

Thermoplastic polyurethane elastomers are excellent in various characteristics, such as mechanical characteristics, thermal characteristics, and electrical characteristics, and are widely used. Their applications are not limited to injection molding, and they are also used for extrusion molding as typified by sheet/film extrusion.

When a thermoplastic polyurethane elastomer is subjected to extrusion molding, as typified by sheet extrusion molding, the melt viscosity varies significantly with temperature changes in the processing temperature region, and the resin is likely to drip or deform immediately after being discharged from the extruder. Further, since the melt tension is small and its temperature dependence is large during film formation, the selection range of conditions for film formation is narrow, there is no film formation stability, and it is difficult to reduce the film thickness. This is because the viscosity is extremely lowered due to the thermal degradation of urethane bonds in a high-temperature region, and the melt fluidity tends to be low due to the formation of physical crosslinking points in a low-temperature region. As described above, in order to obtain satisfactory molded articles from thermoplastic polyurethane elastomers, processing in a very narrow temperature range was necessary.

As a polyurethane resin composition for improving the extrusion molding processability of a thermoplastic polyurethane elastomer, PTL 1 discloses a polyurethane resin composition containing a thermoplastic polyurethane elastomer and an acid-containing thermoplastic olefin copolymer having an acid value of 2 to 100. Further, PTL 2 discloses a polyurethane resin composition comprising a thermoplastic polyurethane elastomer and a resin composition obtained by dynamically crosslinking a composition comprising a specific ethylene-(meth)acrylic acid copolymer and a specific ethylene-(meth)acrylic acid ester-carbon monoxide copolymer in the presence of peroxide. Some polyurethane resin compositions containing an ethylene-(meth)acrylic acid copolymer lost mechanical strength and flexibility, which are the characteristics of thermoplastic polyurethane elastomers. PTL 3 discloses a polyurethane resin composition containing a specific ether-based thermoplastic polyurethane elastomer and a lubricant; however, the lubricant bleeds out to the surface of molded articles with the passage of time, which causes stickiness and contamination. Thus, this composition has not been widely used.

A resin composition of a thermoplastic polyurethane elastomer and multilayered polymer particles is known as a polyurethane resin composition that does not substantially impair the excellent mechanical properties and flexibility of thermoplastic polyurethane elastomers, that has a high affinity to thermoplastic polyurethane elastomers, and that does not cause problems, such as bleed-out and phase separation. PTL4 discloses a soft resin composition of a thermoplastic polyurethane elastomer and an acrylic soft multilayered polymer. Further, PTL 5 discloses a thermoplastic elastomer composition comprising a thermoplastic elastomer and multilayered polymer particles, wherein the multilayered polymer particles comprise two or more layers of a rubber component layer and a thermoplastic resin component layer, and the composition of the rubber component layer, the composition of the thermoplastic resin component layer, the number average molecular weight (Mn) of the polymer of the thermoplastic resin component layer as the outermost layer, the average particle size of the multilayered polymer particles, and the like are optimized. The Examples disclose thermoplastic polyurethane elastomers as thermoplastic elastomers. Polyurethane resin compositions containing multilayered polymer particles have not been improved in extrusion molding processability, and currently, satisfactory improved products have not been obtained.

### Citation List

### Patent Literature

PTL 1: JPS61-271351A
PTL 2: JP2004-231744A
PTL 3: JPH08-27376A
PTL 4: JP2004-238590A
PTL 5: JP2005-255872A

### Summary of Invention

### Technical Problem

An object of the present invention is to provide a formulation that reduces the variation in melt viscosity associated with temperature changes in the processing temperature range and improves extrusion processability without substantially impairing the excellent physical properties of thermoplastic polyurethane elastomers.

### Solution to Problem

As a result of various studies to achieve the above object, the present inventors have found that extrusion moldability can be improved while maintaining the flexibility and mechanical characteristics of a thermoplastic polyurethane elastomer by melt-kneading specific multilayered polymer particles into the thermoplastic polyurethane elastomer, and have completed the present invention.

Specifically, the present invention includes the following embodiments [1] to [7].
[1] A polyurethane resin composition comprising 20 to 99 parts by mass of a thermoplastic polyurethane elastomer (A) and 1 to 80 parts by mass of multilayered polymer particles (B), the multilayered polymer particles (B) satisfying the following conditions (1) to (6):
   (1) the multilayered polymer particles (B) comprise two or more layers having at least one rubber component layer (I) inside and at least one thermoplastic resin component layer (II) in an outermost part,
   (2) the rubber component layer (I) is a polymer layer formed by copolymerizing a monomer mixture (i) comprising 50 to 99.99 mass% of an acrylic acid ester, 49.99 to 0 mass% of an additional monofunctional monomer copolymerizable with the acrylic acid ester, and 0.01 to 10 mass% of a polyfunctional monomer,
   (3) the thermoplastic resin component layer (II) is a polymer layer formed by polymerizing a monomer (ii) comprising 40 to 100 mass% of a methacrylic acid ester and 60 to 0 mass% of an additional monomer copolymerizable with the methacrylic acid ester,
   (4) of the thermoplastic resin component layer (II), a polymer of the outermost layer has a number average molecular weight measured by a GPC method of 30,000 or less,
   (5) the total mass ratio [(I)/(II)] of the rubber component layer (I) to the thermoplastic resin component layer (II) is 30/70 to 90/10, and
   (6) the multilayered polymer particles (B) have an average particle size of 150 nm or less; and
      the melt viscosity ratio ηr of the melt viscosity η(A) of the thermoplastic polyurethane elastomer (A) at a shear rate of 121.6 sec⁻¹ to the melt viscosity η of the polyurethane resin composition at a shear rate of 121.6 sec⁻¹ satisfying the following relationships:
      melt viscosity ratio ηr (180°C) at 180°C: η(A)/η>1.0
      melt viscosity ratio ηr (200°C) at 200°C: η(A)/η≤1.0
[2] The polyurethane resin composition according to [1], wherein the polyurethane resin composition comprises 60 to 99 parts by mass of the thermoplastic polyurethane elastomer (A) and 1 to 40 parts by mass of the multilayered polymer particles (B).
[3] The polyurethane resin composition according to [1] or [2], which has a Shore A hardness of 60 to 95 measured by a method according to JIS K 6253.
[4] The polyurethane resin composition according to any one of [1] to [3], which is a resin composition for extrusion molding.
[5] The polyurethane resin composition according to any one of [1] to [3], which is a resin composition for film extrusion.
[6] A method for producing the polyurethane resin composition according to any one of [1] to [3], the method comprising producing the multilayered polymer particles (B) by the following steps:
   a polymerization reaction step (S1) of forming at least one rubber component layer (I) inside by copolymerizing a monomer mixture (i) comprising 50 to 99.99 mass% of an acrylic acid ester, 49.99 to 0 mass% of an additional monofunctional monomer copolymerizable with the acrylic acid ester, and 0.01 to 10 mass% of a polyfunctional monomer; and
   a polymerization reaction step (S2) of forming at least one thermoplastic resin component layer (II) in at least an outermost part by polymerizing a monomer (ii) comprising 40 to 100 mass% of a methacrylic acid ester and 60 to 0 mass% of an additional monomer copolymerizable with the methacrylic acid ester;
   in the polymerization reaction step (S2), the number average molecular weight of a constituent copolymer of the layer (II) constituting at least the outermost part being 30,000 or less as measured by a GPC method,
   the weight ratio ((i)/(ii)) of the total amount of the monomer mixture (i) to the total amount of the monomer mixture (ii) being within the range of 30/70 to 90/10, and
   the produced multilayered polymer particles (B) having an average particle size of 150 nm or less.
[7] A method for producing an extrusion molded article comprising the polyurethane resin composition according to any one of [1] to [3], the method comprising extruding the polyurethane resin composition at a temperature at which a molten resin temperature in a die during extrusion is 200°C or more.
[8] A method for producing a film comprising the polyurethane resin composition according to any one of [1] to [3], the method comprising subjecting the polyurethane resin composition to film extrusion at a temperature at which a molten resin temperature in a T-die during extrusion is 200°C or more.

### Advantageous Effects of Invention

The present invention provides a polyurethane resin composition having excellent flexibility and mechanical characteristics, and suitable for extrusion moldability.

### Description of Embodiments

One major feature of the present invention is to control the melt viscosity range of a polyurethane resin composition by adding multilayered polymer particles (B) to a thermoplastic polyurethane elastomer (A) having a specific melt viscosity range. That is, when the thermoplastic polyurethane elastomer (A) is melt-molded, the action of controlling the melt viscosity of the polyurethane resin composition to a low viscosity by plasticizing the thermoplastic resin component layer of the multilayered polymer particles at a low temperature, and the action of controlling the melt viscosity of the polyurethane resin composition to a high viscosity by preventing the rubber component layer of the multilayered polymer particles from flowing at a high temperature, sufficiently contribute in a well-balanced manner. From this aspect, it is considered possible to provide a polyurethane resin composition exhibiting good extrusion processability.

The polyurethane resin composition of the present invention is a polyurethane resin composition in which the melt viscosity ratio ηr of the melt viscosity η(A) of the thermoplastic polyurethane elastomer (A) to the melt viscosity η of the polyurethane resin composition satisfies the following relationships. When the melt viscosity ratio ηr satisfies the following relationships, changes in melt viscosity due to temperature changes are small, and draw resonance is thus less likely to occur. It is possible to achieve both an effect of improving fluidity during low-temperature molding and an effect of reducing drawdown (shape deterioration caused by sagging due to its own weight after sheet/film molding) by suppressing a sharp decrease in melt viscosity due to urethane bond dissociation of the thermoplastic polyurethane elastomer during high-temperature molding, and it is possible to improve the extrusion processability of the polyurethane resin composition and expand the molding processing temperature range.
Melt viscosity ratio ηr (180°C) at 180°C: η(A)/η>1.0
Melt viscosity ratio ηr (200°C) at 200°C: η(A)/η≤1.0

The melt viscosity ratio ηr (180°C) is preferably more than 1.0 and 10.0 or less, and more preferably 1.2 to 8.0. The melt viscosity ratio ηr (200°C) is preferably 0.10 to 0.95, and more preferably 0.20 to 0.90.

The melt viscosity of the present invention refers to the melt viscosity at a shear rate of 121.6 sec⁻¹ as measured by a capillograph according to JIS K 7199.

The thermoplastic polyurethane elastomer (A) used in the present invention is an extrudable thermoplastic polyurethane elastomer. The thermoplastic polyurethane elastomer can be obtained by reacting a diisocyanate compound with a compound having two or more hydroxyl groups. In particular, one having a microphase-separated structure consisting of soft and hard segments composed of a diisocyanate, a long-chain polyol, and a chain extender can be preferably used.

Examples of the diisocyanate compound for synthesizing the thermoplastic polyurethane elastomer (A) used in the present invention include aliphatic diisocyanates, such as hexamethylene diisocyanate and 2,2,4-trimethylhexamethylene diisocyanate; alicyclic diisocyanates, such as 1,4-cyclohexane diisocyanate, isophorone diisocyanate, and 4,4'-dicyclohexylmethane diisocyanate; aromatic diisocyanates, such as p-phenylene diisocyanate, 2,4-tolylene diisocyanate, 2,6-tolylene diisocyanate, 3,3'-dimethyldiphenyl-4,4'-diisocyanate, and 4,4'-diphenylmethane diisocyanate; and the like. Among these, aromatic diisocyanates, such as 4,4'-diphenylmethane diisocyanate, 2,4-tolylene diisocyanate, and 2,6-tolylene diisocyanate, are preferred from the viewpoint of mechanical properties.

Examples of the compound having two or more hydroxyl groups include polyester-based polyols, which are condensation reaction products of dibasic acids, such as adipic acid or phthalic acid, and glycols, such as ethylene glycol or 1,4-butanediol; polyether-based polyols, such as polyethylene glycol, polypropylene glycol, polytetramethylene glycol, and polyethylene glycol-polypropylene glycol; and polycarbonate-based polyols, which are reaction products of carbonates, such as ethylene carbonate, and glycols. Other examples include polyols, such as castor oil-based polyols and polyols using a butadiene skeleton. The polyurethane resin composition of the present invention is more effective for polyether-based polyols having low stability against thermal oxidative degradation, because the extrusion processability is improved, and the molding processing temperature range can be expanded.

The polyol preferably has a number average molecular weight of 500 to 8,000, and particularly 1,000 to 6,000. The number average molecular weight of the polyol mentioned in the present specification is the number average molecular weight calculated based on the hydroxyl value measured according to JIS K 1557.

Examples of the chain extender include ethylene glycol, 1,2-propanediol, 1,3-propanediol, 1,4-butanediol, 1,6-hexanediol, diethylene glycol, triethylene glycol, bisphenol A, p-xylylene glycol, and the like.

In the production of the thermoplastic polyurethane elastomer (A) used in the present invention, a catalyst, a molecular weight regulator, and the like are appropriately used in addition to the above components as necessary. As the production method, conventionally known methods, such as bulk polymerization methods and solution methods, can be applied. For example, bulk polymerization methods include a one-shot method in which a polyol, a chain extender, and a diisocyanate are simultaneously polymerized, and a prepolymer method in which after a polyol and a diisocyanate are reacted in advance to synthesize a prepolymer, a chain extender is added to perform polymerization. These methods can be used for industrial production by a batch method, a band casting method, and a reactive extrusion method.

The melt viscosity η(A) of the thermoplastic polyurethane elastomer (A) used in the present invention is preferably a value measured at 180°C of 500 to 10,000 Pa·s, more preferably 1,000 to 8,000 Pa·s, and even more preferably 1,500 to 5,000 Pa·s. Further, the value measured at 200°C is preferably 100 to 1,500 Pa·s, more preferably 200 to 1,300 Pa·s, and even more preferably 300 to 1,000 Pa·s. When the melt viscosity values at 180°C and 200°C are in the above ranges, the polyurethane resin composition of the present invention has good extrusion molding processability.

The melt flow rate (referred to below as "MFR") of the thermoplastic polyurethane elastomer (A) used in the present invention is preferably about 0.1 to 50 g/10 min, particularly about 0.5 to 40 g/10 min. When the MFR is in the range of 0.1 to 50 g/10 min, the extrusion molding processability is good. The MFR of the thermoplastic polyurethane elastomer (A) is a value measured at a temperature of 190°C under a load of 2.16 kg using a melt indexer according to JIS K 7210.

The thermoplastic polyurethane elastomer (A) used in the present invention preferably has a Shore A hardness of about 70 to 98, particularly about 80 to 95. When the Shore A hardness is in the range of 70 to 98, the flexibility is good. The Shore A hardness in the present specification is a value measured with a type A indenter using a durometer according to JIS K 6253.

The multilayered polymer particles (B) have at least one rubber component layer (I) inside (sometimes simply referred to below as "layer (I)") and at least one thermoplastic resin component layer (II) (sometimes simply referred to below as "layer (II)") in an outermost part. The number of layers of the multilayered polymer particles (B) used in the present invention may be two or more, and can be three, four, or more. Examples of the layer structure include a two-layer structure of layer (I)-layer (II); a three-layer structure of layer (I)-layer (I)-layer (II), layer (I)-layer (II)-layer (II), or layer (II)-layer (I)-layer (II); a four-layer structure of layer (I)-layer (II)-layer (I)-layer (II); and the like in the order from the center. Among these, a two-layer structure of layer (I)-layer (II), or a three-layer structure of layer (I)-layer (I)-layer (II) or layer (II)-layer (I)-layer (II) is preferred, from the viewpoint of handling."-" means "and."

The mass ratio (layer (I)/layer (II)) of the total amount of the rubber component layer (I) to the total amount of the thermoplastic resin component layer (II) is required to be 30/70 to 90/10. If the proportion of the layer (I) is less than the range described above, the polyurethane resin composition of the present invention may have insufficient flexibility. If the proportion of the layer (I) is more than the range described above, it is difficult to form a particle structure, and the melt fluidity is reduced, which may make kneading with other components and molding of the polyurethane resin composition of the present invention difficult. The mass ratio (layer (I)/layer (II)) is preferably 50/50 to 90/10, and more preferably 60/40 to 80/20.

The layer (I) is required to comprise a copolymer of 50 to 99.99 mass% of an acrylic acid ester monomer unit, 49.99 to 0 mass% of an additional monofunctional monomer unit, and 0.01 to 10 mass% of a multifunctional monomer unit. The content of the acrylic acid ester monomer unit is preferably 55 to 99.9 mass%, the content of the additional monofunctional monomer unit is preferably 44.9 to 0 mass%, and the content of the polyfunctional monomer unit is preferably 0.1 to 2 mass%. If the content of the acrylic acid ester monomer unit is less than 50 mass%, the rubber elasticity of the multilayered polymer particles (B) and the weather resistance of the polyurethane resin composition to be obtained are reduced. If the content of the acrylic acid ester monomer unit is more than 99.99 mass%, it becomes difficult for the multilayered polymer particles (B) to form a layer structure in a complete form, the melt fluidity is extremely reduced, and melt-kneading with other components, such as the thermoplastic polyurethane elastomer (A), and molding become difficult. Further, if the content of the polyfunctional monomer unit is more than 10 mass%, the multilayered polymer particles (B) do not show rubber elasticity and have inefficient flexibility. If the content of the polyfunctional monomer unit is less than 0.01 mass%, the layer (I) is not formed as a particle structure.

The starting monomers of the layer (I) are described below.

Examples of acrylic acid esters include esters of acrylic acid and saturated aliphatic alcohols (preferably C₁ to C₁₈ saturated aliphatic alcohols), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and C₅ or C₆ alicyclic alcohols, such as cyclohexyl acrylate; esters of acrylic acid and phenols, such as phenyl acrylate; esters of acrylic acid and aromatic alcohols, such as benzyl acrylate; and the like. Such acrylic acid esters can be used singly or in a combination of two or more.

Polyfunctional monomers are monomers having two or more carbon-carbon double bonds in the molecule. Examples of polyfunctional monomers include esters of unsaturated monocarboxylic acids, such as acrylic acid, methacrylic acid, and cinnamic acid, with unsaturated alcohols, such as allyl alcohol and methallyl alcohol; diesters of the above unsaturated monocarboxylic acids with glycols, such as ethylene glycol, butanediol, and hexanediol; esters of dicarboxylic acids, such as phthalic acid, terephthalic acid, isophthalic acid, and maleic acid, with the above unsaturated alcohols. Specific examples include allyl acrylate, methallyl acrylate, allyl methacrylate (ALMA), methallyl methacrylate, allyl cinnamate, methallyl cinnamate, diallyl maleate, diallyl phthalate, diallyl terephthalate, diallyl isophthalate, divinylbenzene, ethylene glycol di(meth)acrylate, butanediol di(meth)acrylate, and hexanediol di(meth)acrylate. Among these, allyl methacrylate (ALMA) is preferred. Such polyfunctional monomers can be used singly or in a combination of two or more.

Examples of the additional monofunctional monomer include methacrylic acid esters including the following: esters of methacrylic acid and saturated aliphatic alcohols (preferably C₁ to C₂₂ saturated aliphatic alcohols), such as methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, dodecyl methacrylate, myristyl methacrylate, palmityl methacrylate, stearyl methacrylate, and behenyl methacrylate; esters of methacrylic acid and C₅ or C₆ alicyclic alcohols, such as cyclohexyl methacrylate; esters of methacrylic acid and phenols, such as phenyl methacrylate; esters of methacrylic acid and aromatic alcohols, such as benzyl methacrylate; aromatic vinyl monomers, such as styrene (St), α-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers, such as acrylonitrile and methacrylonitrile; and the like. Such additional monofunctional monomers can be used singly or in a combination of two or more.

The layer (II) is required to comprise a copolymer of 40 to 100 mass% of a methacrylic acid ester monomer unit and 60 to 0 mass% of an additional monomer unit. The content of the methacrylic acid ester monomer unit is preferably 60 to 99 mass%, more preferably 80 to 99 mass%, and the content of the additional monomer unit is preferably 40 to 1 mass%, more preferably 20 to 1 mass%. If the content of the methacrylic acid ester monomer unit is less than 40 mass%, the compatibility between the multilayered polymer particles (B) and the other components, such as the thermoplastic polyurethane elastomer (A), may be reduced, which may cause insufficient dispersion during melt-kneading and molding.

The starting monomers of the layer (II) are described below.

Examples of methacrylic acid esters include methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate, behenyl methacrylate, octadecyl methacrylate, phenyl methacrylate, benzyl methacrylate, and the like. Among these, methyl methacrylate (MMA) is preferred.

Examples of the additional monomer include esters of acrylic acid and saturated aliphatic alcohols (preferably C₁ to C₁₈ saturated aliphatic alcohols), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and C₅ or C₆ alicyclic alcohols, such as cyclohexyl acrylate; aromatic vinyl monomers, such as styrene (St), α-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers, such as acrylonitrile and methacrylonitrile; maleimide monomers, such as maleimide, N-methylmaleimide, N-ethylmaleimide, N-propylmaleimide, N-isopropylmaleimide, N-cyclohexylmaleimide, N-phenylmaleimide, N-(p-bromophenyl)maleimide, and N-(chlorophenyl)maleimide; polyfunctional monomers given as examples in the description of the layer (I); and the like. Among these, alkyl esters of acrylic acid, such as methyl acrylate (MA), ethyl acrylate, and n-butyl acrylate (BA), are preferred.

In the multilayered polymer particles (B) used in the present invention, the number average molecular weight of the copolymer constituting at least the outermost layer of the particles in the layer (II) contained therein is required to be 30,000 or less, preferably 29,000 or less, more preferably 28,000 or less, and even more preferably 25,000 or less, based on measurement by a GPC (gel permeation chromatography) method. If the number average molecular weight is more than 30,000, the flexibility of a molded article obtained by molding the multilayered polymer particles (B) may be insufficient, and the melt fluidity may be reduced. The lower limit of the number average molecular weight is not necessarily strictly limited; however, the number average molecular weight is preferably not less than 1,000, from the viewpoint of the process passability of the multilayered polymer particles (B) in the production process. From the viewpoint of achieving both flexibility and passability in the production process, the number average molecular weight is particularly preferably within the range of 3,000 to 20,000.

The average particle size of the multilayered polymer particles (B) used in the present invention is required to be 150 nm or less. If the average particle size of the multilayered polymer particles (B) is more than 150 nm, the flexibility becomes insufficient. In addition, the melt fluidity may be poor. The lower limit of the average particle size is not particularly limited; however, the average particle size is preferably 30 nm or more, from the viewpoint of easily forming a predetermined layer structure of the multilayered polymerized particles (B). The average particle size is more preferably 80 to 120 nm. The average particle size of the multilayered polymer particles (B) is determined by sampling the latex at the time of polymerization of the multilayered polymer particles, and performing the measurement by a light scattering method using a laser diffraction/scattering particle size distribution analyzer (LA-950V2, produced by Horiba, Ltd.). In the state of a polyurethane resin composition, the average particle size can also be measured by a transmission electron microscope.

The multilayered polymer particles (B) are preferably multilayered polymer particles (BX) having a three-layer structure including, from the center, a rubber component layer (Ia) as the first rubber component layer (I), a rubber component layer (Ib) as the second rubber component layer (I), and a thermoplastic resin component layer (II), from the viewpoint of physical properties, ease of production, and the like.

From the viewpoint of achieving both flexibility and other mechanical properties of the polyurethane resin composition of the present invention, the mass ratio ((Ia)/(Ib)) of the rubber component layer (Ia) to the rubber component layer (Ib) is preferably 5/95 to 95/5, and more preferably 20/80 to 80/20.

From the viewpoint of achieving both flexibility and other mechanical properties of the polyurethane resin composition of the present invention, the content of the acrylic acid ester monomer unit (C_{AE}(Ia) (mass%)) in the rubber component layer (Ia) is preferably higher than the content of the acrylic acid ester monomer unit (C_{AE}(Ib) (mass%)) in the rubber component layer (lb) (C_{AE}(Ia)>C_{AE}(Ib)). Furthermore, the amount obtained by subtracting the content of the acrylic acid ester monomer unit in the rubber component layer (Ib) (C_{AE}(Ib) (mass%)) from the content of the acrylic acid ester monomer unit in the rubber component layer (Ia) (C_{AE}(Ia) (mass%)) is preferably 3 mass% or more (3≤[C_{AE}(Ia)-C_{AE}(Ib)]), and more preferably 4 to 30 mass% (4≤[C_{AE}(Ia)-C_{AE}(Ib)]≤30).

The multilayered polymer particles (B) can be produced by performing a polymerization reaction step (S1) of forming the rubber component layer (I) and a polymerization reaction step (S2) of forming the thermoplastic resin component layer (II) in the order of lamination.

In the polymerization reaction step (S1), a monomer mixture (i) corresponding to the copolymer composition of the rubber component layer (I) is copolymerized by a known method. Similarly, in the polymerization reaction step (S2), a monomer mixture (ii) corresponding to the copolymer composition of the thermoplastic resin component layer (II) is copolymerized by a known method. In the polymerization reaction step (S2), the polymerization conditions are adjusted so that the Mn of the constituent copolymer of the layer (II) constituting at least the outermost part is 30,000 or less. Further, the polymerization conditions are adjusted so that the mass ratio ((i)/(ii)) of the total amount of the monomer mixture (i) to the total amount of the monomer mixture (ii) is within a range of 30/70 to 90/10, and so that the average particle size of the multilayered polymer particles (B) finally obtained by the polymerization reaction step (S1) and the polymerization reaction step (S2) is 150 nm or less.

In the polymerization reaction step (S2) of forming the thermoplastic resin component layer (II) in the at least outermost part, a molecular weight regulator is preferably used at a ratio of 0.4 to 10 mass% based on the monomer mixture (ii). The amount of the molecular weight regulator used is more preferably 0.4 to 5 mass%, and particularly preferably 0.6 to 2 mass%, based on the monomer mixture (ii).

In general, in the production of multilayered polymer particles, the amount of the molecular weight regulator used in the polymerization reaction step of forming the thermoplastic resin component layer in the outermost part is about 0 to 0.3 mass% based on the monomer (mixture). However, according to the findings of the present inventors, when the amount of the molecular weight regulator used is 0.4 mass% or more, the Mn of the thermoplastic resin component constituting the outermost part stably becomes 30,000 or less, and the flexibility and moldability of the polyurethane resin composition can be both stably achieved. If the amount of the molecular weight regulator used is more than 10 mass%, the effect of further improving flexibility cannot be obtained, and only the remaining amount of the originally unnecessary molecular weight regulator increases.

Examples of the molecular weight regulator include mercaptans, such as n-octyl mercaptan, t-octyl mercaptan, n-dodecyl mercaptan, t-dodecyl mercaptan, and mercaptoethanol; terpene mixtures of terpinolene, dipentene, t-terpinene, and minor amounts of other cyclic terpenes; halogenated hydrocarbons, such as chloroform and carbon tetrachloride; and the like. Among these, alkyl mercaptans, such as n-octyl mercaptan, are preferred. Such molecular weight regulators can be used singly or in a combination of two or more.

The polymerization method of the multilayered polymer particles (B) is not particularly limited, and known methods, such as an emulsion polymerization method, a suspension emulsion polymerization method, a solution polymerization method, and a combination thereof, can be employed.

Suitable conditions for the polymerization of the multilayered polymer particles (B) by an emulsion polymerization method are described below as an example.

The polymerization temperature is generally 0 to 100°C.

Examples of emulsifiers include alkali metal salts of fatty acids, such as sodium oleate, sodium laurate, and sodium stearate; sulfates of fatty alcohols, such as sodium lauryl sulfate; rosinates, such as potassium rosinate; alkylarylsulfonic acids, such as dodecylbenzenesulfonic acid; and the like. Such emulsifiers can be used singly or in a combination of two or more.

As a polymerization initiator, a radical polymerization initiator is generally used. As the radical polymerization initiator, a peroxide, such as persulfate, azobisisobutyronitrile, or benzoyl peroxide, can be used alone. A redox initiator in which an organic hydroperoxide, such as cumene hydroperoxide, diisopropylbenzene hydroperoxide, or para-menthane hydroperoxide, is combined with a reducing agent, such as a transition metal salt, can also be used.

The average particle size of the multilayered polymer particles (B) can be controlled to 150 nm or less by adjusting the polymerization conditions, such as the addition amount of the emulsifier.

The separation and acquisition of the multilayered polymer particles (B) from the reaction system after completion of the polymerization can be performed by a known method, such as an acid precipitation method, a salt precipitation method, a spray drying method, and a freeze coagulation method.

The melt viscosity of the multilayered polymer particles (B) used in the present invention is preferably a value measured at 180°C of 1,000 to 4,000 Pa·s, more preferably 1,200 to 3,500 Pa·s, and even more preferably 1,500 to 3,000 Pa·s. The value measured at 200°C is preferably 800 to 3,000 Pa·s, more preferably 900 to 2,500 Pa·s, and even more preferably 1,000 to 2,000 Pa·s. When the melt viscosity values at 180°C and 200°C are in the above ranges, the polyurethane resin composition of the present invention has good extrusion molding processability.

The multilayered polymer particles (B) used in the present invention preferably have a melt flow rate (referred to below as "MFR") of about 1.0 to 50 g/10 min, particularly about 5.0 to 20 g/10 min. When the MFR is in the range of 1.0 to 50 g/10 min, the extrusion molding processability is good. The MFR of the multilayered polymer particles (B) is a value measured at a temperature of 230°C under a load of 10 kg using a melt indexer according to JIS K 7210.

The multilayered polymer particles (B) used in the present invention preferably have a Shore A hardness of about 60 to 95, particularly about 70 to 90. When the Shore A hardness is in the range of 60 to 95, the flexibility is good. The Shore A hardness in the present specification is a value measured with a type A indenter using a durometer according to JIS K 6253.

The polyurethane resin composition of the present invention contains a thermoplastic polyurethane elastomer (A) and multilayered polymer particles (B). The mass ratio ((A)/(B)) of the thermoplastic polyurethane elastomer (A) to the multilayered polymer particles (B) is 20/80 to 99/1, from the viewpoint of achieving both flexibility and extrusion moldability. The mass ratio ((A)/(B)) is preferably 60/40 or more, and more preferably 70/30 or more. The mass ratio ((A)/(B)) is preferably 97/3 or less, and more preferably 95/5 or less. When the mass ratio is equal to or less than the above upper limit, ηr (200°C) can be reduced.

The method of mixing the thermoplastic polyurethane elastomer (A) and the multilayered polymer particles (B) is not particularly limited, and a melt-mixing method is preferred. In the melt-mixing method, melt-kneading can be performed in an inert gas atmosphere, such as nitrogen gas, argon gas, and helium gas, as necessary, using a melt kneader, such as a single-screw or a multi-screw kneader having two or more screws, an open roll, a Banbury mixer, or a kneader.

The polyurethane resin composition of the present invention may further contain a methacrylic resin in addition to the thermoplastic polyurethane elastomer (A) and the multilayered polymer particles (B). The number average molecular weight (Mn) of the methacrylic resin measured by a GPC method is preferably 10,000 to 100,000, and more preferably 15,000 to 50,000. When a methacrylic resin having Mn in the above range is used, the polyurethane resin composition of the present invention has more excellent moldability. The content of the methacrylic resin is not particularly limited, and is preferably 1 to 20 parts by mass, and more preferably 1 to 10 parts by mass, based on 100 parts by mass of the total amount of the thermoplastic polyurethane elastomer (A) and the multilayered polymer particles (B), from the viewpoint of improving the flexibility and moldability of the polyurethane resin composition of the present invention.

The methacrylic resin is a resin containing a methyl methacrylate (MMA) monomer unit. The methacrylic resin may be a homopolymer of MMA (polymethyl methacrylate (PMMA)) or a copolymer of a plurality of monomers including MMA. The methacrylic resin is preferably a methacrylic resin (CX) composed of 40 to 100 mass% (preferably 70 to 100 mass%) of MMA unit and 60 to 0 mass% (preferably 30 to 0 mass%) of other monomer units copolymerizable with MMA.

Other monomers copolymerizable with MMA include methacrylic acid esters other than MMA. Examples of such methacrylic acid esters include alkyl methacrylates, such as ethyl methacrylate, n-propyl methacrylate, isopropyl methacrylate, n-butyl methacrylate, isobutyl methacrylate, t-butyl methacrylate, pentyl methacrylate, hexyl methacrylate, heptyl methacrylate, 2-ethylhexyl methacrylate, nonyl methacrylate, decyl methacrylate, and dodecyl methacrylate; cycloalkyl methacrylates, such as 1-methylcyclopentyl methacrylate, cyclohexyl methacrylate, cycloheptyl methacrylate, cyclooctyl methacrylate, and tricyclo[5.2.1.0^{2,6}]deca-8-ylmethacrylate; aryl methacrylates, such as phenyl methacrylate; aralkyl methacrylates, such as benzyl methacrylate; and the like. From the viewpoint of availability, ethyl methacrylate, n-propyl methacrylate, isopropyl methacrylate, n-butyl methacrylate, isobutyl methacrylate, and t-butyl methacrylate are preferred.

Examples of the other monomers include monomers other than methacrylic acid esters. Examples of such other monomers include acrylic acid esters, such as methyl acrylate (MA), ethyl acrylate, n-propyl acrylate, isopropyl acrylate, n-butyl acrylate (BA), isobutyl acrylate, t-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. Among these, from the viewpoint of availability, acrylic acid esters, such as methyl acrylate (MA), ethyl acrylate, n-propyl acrylate, isopropyl acrylate, n-butyl acrylate (BA), isobutyl acrylate, and t-butyl acrylate, are preferred; methyl acrylate (MA) and ethyl acrylate are more preferred; and methyl acrylate (MA) is particularly preferred.

The polyurethane resin composition of the present invention may contain other polymers, as required, in addition to the thermoplastic polyurethane elastomer (A), the multilayered polymer particles (B), and a methacrylic resin as long as the effect of the present invention is not impaired. Examples of such other polymers include the following: olefin resins, such as polyethylene, polypropylene, polybutene-1, poly-4-methylpentene-1, and polynorbornene; ethylene ionomers; styrene resins, such as polystyrene, styrene-maleic anhydride copolymers, high-impact polystyrene, AS resin, ABS resin, AES resin, AAS resin, ACS resin, and MBS resin; methyl methacrylate-styrene copolymers; ester resins, such as polyethylene terephthalate and polybutylene terephthalate; amide resins, such as nylon 6, nylon 66, and polyamide elastomers; other thermoplastic resins, such as polyphenylene sulfide, polyether ether ketone, polysulfone, polyphenylene oxide, polyimide, polyetherimide, polycarbonate, polyvinyl chloride, polyvinylidene chloride, polyvinylidene fluoride, polyvinyl alcohol, ethylene-vinyl alcohol copolymers, polyacetal, and phenoxy resins; thermosetting resins, such as phenolic resins, melamine resins, silicone resins, and epoxy resins; polyurethane; modified polyphenylene ether; silicone-modified resins; acrylic rubber and silicone rubber; styrene thermoplastic elastomers, such as SEPS, SEBS, and SIS; and olefin rubbers, such as IR, EPR, and EPDM. Such other polymers can be used singly or in a combination of two or more.

The polyurethane resin composition of the present invention may contain various additives, if necessary. Examples of the additives include antioxidants, thermal degradation inhibitors, ultraviolet absorbers, light stabilizers, lubricants, mold release agents, polymer processing aids, antistatic agents, flame retardants, dyes and/or pigments, light diffusing agents, delusterants, agglutination inhibitors, impact resistance modifiers, phosphors, and the like. The contents of such additives can be appropriately set as long as the effect of the present invention is not impaired. For example, preferably, the content of the antioxidant is 0.01 to 1 part by mass, the content of the ultraviolet absorber is 0.01 to 3 parts by mass, the content of the light stabilizer is 0.01 to 3 parts by mass, the content of the lubricant is 0.01 to 3 parts by mass, the content of the dye and/or pigment is 0.01 to 3 parts by mass, and the content of the agglutination inhibitor is 0.001 to 1 part by mass, based on 100 parts by mass of the polyurethane resin composition.

When other polymers and/or additives are contained in the polyurethane resin composition of the present invention, they may be added during polymerization of the thermoplastic polyurethane elastomer (A) and/or the multilayered polymer particles (B), may be added during mixing of the thermoplastic polyurethane elastomer (A) and the multilayered polymer particles (B), or may be added after mixing the thermoplastic polyurethane elastomer (A) and the multilayered polymer particles (B).

The melt viscosity η of the polyurethane resin composition of the present invention is preferably a value measured at 180°C of 500 to 4,000 Pa·s, more preferably 800 to 3,000 Pa·s, and even more preferably 1,000 to 2,500 Pa·s. The value measured at 200°C is preferably 200 to 1,000 Pa·s, more preferably 300 to 800 Pa·s, and even more preferably 400 to 700 Pa·s. When the melt viscosity values at 180°C and 200°C are in the above ranges, the polyurethane resin composition of the present invention has good extrusion molding processability.

The melt flow rate (referred to below as "MFR") of the polyurethane resin composition of the present invention is preferably 0.1 to 50 g/10 min, and more preferably 0.5 to 40 g/10 min. When the MFR is in the range of 0.1 to 50 g/10 min, the extrusion molding processability is good. The MFR of the polyurethane resin composition is a value measured at a temperature of 190°C under a load of 2.16 kg using a melt indexer according to JIS K 7210.

The polyurethane resin composition of the present invention preferably has a Shore A hardness of 60 to 95, and more preferably about 65 to 90. When the Shore A hardness is in the range of 60 to 95, the flexibility is good. The Shore A hardness in the present specification is a value measured with a type A indenter using a durometer according to JIS K 6253.

The polyurethane resin composition of the present invention is excellent in extrusion moldability when the melt viscosity ratio ηr of the melt viscosity η(A) of the thermoplastic polyurethane elastomer (A) to the melt viscosity η of the polyurethane resin composition is within a specific range. Therefore, for example, in film molding by a T-die method, since the melt viscosity is appropriately maintained in a wide molding temperature range, appearance defects due to melt fracture or the like are less likely to occur, and drawdown is less likely to occur, so that the maximum film pulling speed can be set high and the productivity is excellent. Further, since molding at a low temperature is possible, it is possible to suppress the occurrence of burning or die drool due to thermal degradation.

In addition, the polyurethane resin composition of the present invention can have excellent characteristics, such as flexibility and mechanical characteristics, inherent in the thermoplastic polyurethane elastomer.

Since the polyurethane resin composition of the present invention contains the specific multilayered polymer particles (B), good flexibility and mechanical characteristics can be maintained. Since the polyurethane resin composition of the present invention has excellent flexibility, the obtained film has a large tensile elongation at break and is difficult to break.

As described above, according to the present invention, it is possible to provide a polyurethane resin composition having excellent flexibility, mechanical characteristics, and extrusion moldability.

The polyurethane resin composition of the present invention can be molded to obtain a molded article of any shape, such as a pellet shape, a sheet shape, a film shape, a pipe shape, a fiber shape, a hollow shape, or a box shape.

Examples of the molding method include extrusion molding methods, such as a profile extrusion molding method, an extrusion sheet molding method, a T-die lamination molding method, an inflation method, and an extrusion coating method; injection molding methods, such as an insert injection molding method, a two-color injection molding method, a core back injection molding method, a sandwich injection molding method, and an injection press molding method; blow molding method; calendar molding method; press molding method; slush molding method; hollow molding method; vacuum molding method; and foam molding method.

One embodiment of the molded article is a film. In general, one having a thickness of 5 to 200 µm is mainly classified as a "film," and one having a thickness of more than 200 µm is mainly classified as a "sheet." However, in the present specification, the film and the sheet are collectively referred to as a "film" without clear distinction. For film applications according to the general classification, the thickness is preferably 8 to 200 µm. For sheet applications according to the general classification, the thickness is preferably 0.2 to 4.0 mm.

The film forming method (film formation method) is preferably an extrusion molding method. Examples of melt-extrusion methods include a T-die method, an inflation method, and the like, and the T-die method is preferred from the viewpoint of thickness accuracy and productivity. The melt-extrusion temperature is preferably 130 to 240°C. From the viewpoint of suppressing the thermal degradation of the thermoplastic polyurethane elastomer, the extrusion is preferably performed at a temperature at which the cylinder temperature of the extruder is 200°C or less, and it is preferable that ηr>1.0. In addition, from the viewpoint of thinning and improving productivity, the extrusion is preferably performed at a temperature at which the temperature of the molten resin in the die is 200°C or more, and it is preferable that ηr≤1.0. In particular, from the viewpoint of thinning and improving productivity, the extrusion is preferably performed at a temperature at which the temperature of the molten resin in the T-die is 200°C or more, and it is preferable that ηr≤1.0. Examples of the extruder include a single-screw extruder and a multi-screw extruder having two or more screws.

The T-die method is a film forming method in which a molten resin composition is expanded to a desired film width with a substantially uniform thickness, extruded into a film shape from a slit-shaped die (lip), and cooled by bringing it into contact with a cooling roll. In general, in the T-die method, it is desired to set the rotation speed of the cooling roll (film pulling speed) to be relatively high in order to reduce the film thickness and improve productivity. However, in that case, depending on the composition, unevenness occurs in the width and thickness of the film, and waviness or breakage of the film may occur. The polyurethane resin composition of the present invention is excellent in extrusion moldability. Therefore, even when the film pulling speed is set to be relatively high in film formation by the T-die method, unevenness is less likely to occur in the width and thickness of the film, and waviness and breakage of the film are less likely to occur. Therefore, the polyurethane resin composition of the present invention is excellent in film productivity.

A molded article (including a film) made of the polyurethane resin composition of the present invention generally has excellent flexibility, and thus is suitably used for soft members in the fields of interior and exterior materials for automobiles, home appliance members, electric wire coatings, medical members, miscellaneous goods, footwear, and transportation belts.

### Examples

The following describes Production Examples, Examples, and Comparative Examples of the present invention.

### Evaluation Items and Evaluation Methods

The evaluation items and evaluation methods in the Production Examples, Examples, and Comparative Examples are as described below.

### Average Particle Size of Multilayered Polymer Particles

Using a sample collected from the latex after completion of polymerization, the average particle size of the multilayered polymer particles was measured by a dynamic light scattering method using a light scattering photometer DLS-600 produced by Otsuka Electronics Co., Ltd., and analyzed and determined by a cumulant method.

### Number Average Molecular Weight of Outermost Layer of Multilayered Polymer Particles

The number average molecular weight of the polymer component constituting the outermost layer of the multilayered polymer particles was measured by a GPC method using a solution obtained by sufficiently stirring a sample of the multilayered polymer particles in toluene at room temperature, followed by centrifugation. The thus-obtained value was regarded as the number average molecular weight of the polymer constituting the outermost layer in the present invention.

### Melt Viscosity

The resin compositions shown in the Examples and Comparative Examples were extruded from a capillary with a diameter of 1 mm and a length of 40 mm at 180°C and 200°C using a capillary rheometer (Capilograph 1D, produced by Toyo Seiki Seisaku-sho, Ltd.) at a piston speed of 10 mm/min (shear rate: 121.6 sec), and values evaluated from shearing stress generated at that time were used.

### Shore A Hardness

The resin compositions shown in the Examples and Comparative Examples were each placed in a mold and press-molded at 200°C to obtain press sheets with a thickness of 6 mm. The obtained press sheets were measured according to JIS K 6253 using an Asker rubber hardness meter type A (produced by Kobunshi Keiki Co., Ltd.).

### Tensile Elongation

The resin compositions shown in the Examples and Comparative Examples were each placed in a mold and press-molded at 200°C to obtain press sheets with a thickness of 2 mm. The obtained press sheets were punched into a dumbbell shape No. 3 (JIS K 6251) and measured according to JIS K 6253 using an autograph (AG-1S, produced by Shimadzu Corporation). In an environment of 23°C and 50% relative humidity, uniaxial stretching was performed at a tensile speed of 300 mm/min, and the elongation when the test piece was broken was determined as the tensile elongation.

### Moldability

The resin compositions shown in the Examples and Comparative Examples were each placed in a mold and press-molded at 200°C to obtain press sheets with a thickness of 1 mm. The obtained press sheets were punched into a cylindrical shape with a diameter of 8 mm, and the storage modulus G' at a temperature of 25 to 230°C (heating rate: 3°C/min) was measured with a rotary rheometer (Discovery HR-2, produced by TA Instruments) using an 8-mm parallel plate at a frequency of 1 Hz. From the storage modulus G'(30°C) at 30°C and the storage modulus G'(200°C) at 200°C, the moldability was evaluated by the following formulas. The moldability refers to an item to which entropic elasticity, such as drawdown and draw resonance, contributes.
Pass: G'(200°C)/G'(30°C)×100≥0.1%
Fail: G'(200°C)/G'(30°C)×100<0.1%

### Occurrence of Die Drool

The resin compositions shown in the Examples and Comparative Examples were subjected to film extrusion using a single-screw film extruder capable of forming a sheet with a width of about 15 cm, while the die thickness was adjusted to 0.3 mm, and the screw rotation speed was adjusted so that the discharge amount was 35 kg/hr. At this time, the occurrence of "die drool" in the vicinity of the die 10 minutes after the start of extrusion was visually observed. For the cylinder temperature and the die temperature, optimum temperature conditions were set from the melt viscosity (shear rate: 121.6/sec) measured by a capillary rheometer. That is, from the melt viscosity values measured at the different temperatures, temperatures at which the melt viscosity was 1000 Pa·s at a shear rate of 121.6/sec were set as the optimum temperature conditions. The occurrence of die drool was evaluated based on the following evaluation criteria.
A: No occurrence of die drool was confirmed.
B: Although the occurrence of die drool was observed in the vicinity of the die, no die drool was removed.
C: Significant die drool occurred, and some of the die drool was mixed into the film.

### Film Appearance

The resin compositions shown in the Examples and Comparative Examples were subjected to film extrusion using a single-screw film extruder capable of forming a film with a width of about 150 mm, while the die thickness was adjusted to 0.3 mm, and the screw rotation speed was adjusted so that the discharge amount was 35 kg/hr. For the cylinder temperature and the die temperature, optimum temperature conditions were set from the melt viscosity (shear rate: 121.6/sec) measured by a capillary rheometer. That is, from the melt viscosity values measured at the different temperatures, temperatures at which the melt viscosity was 1000 Pa·s at a shear rate of 121.6/sec were set as the optimum temperature conditions. The center portion (width: 100 mm × 5 m) of the obtained film was visually observed, and the appearance was evaluated according to the following criteria. The evaluation criteria are as follows.
Pass: No noticeable defect phenomenon, such as die line or melt fracture, was observed.
Fail: Any noticeable defect phenomenon, such as die line and melt fracture, was observed.

### Starting Materials

The following elastomers were used as thermoplastic polyurethane elastomers (A) in the Examples and Comparative Examples.

Polyurethane thermoplastic elastomer (A-1): Pandex T-1180, produced by DIC Covestro Polymer Ltd., was used. This product is an adipate ester polyurethane thermoplastic elastomer.

Polyurethane thermoplastic elastomer (A-2): Pandex T-8190, produced by DIC Covestro Polymer Ltd., was used. This product is an ether polyurethane thermoplastic elastomer.

The names and abbreviations (in parentheses) of the monomers used in the Production Examples are shown below: methyl methacrylate (MMA), n-butyl acrylate (BA), methyl acrylate (MA), styrene (St), allyl methacrylate (ALMA).

### Production Example 1: Multilayered Polymer Particles (B-1)

150 parts by mass of distilled water, 1.3 parts by mass of an emulsifier (Neopelex G-15, produced by Kao Corporation), and 1.0 part by mass of a dispersant (Poiz 520, produced by Kao Corporation) were placed in a polymerizer equipped with a stirring blade, a cooling tube, and a dropping funnel in a nitrogen atmosphere, and heated to 80°C to homogeneously dissolve these materials. Subsequently, 0.05 parts by mass of potassium peroxodisulfate 3% aqueous solution was added at the same temperature, and then a mixture formed of 41.25 parts by mass of n-butyl acrylate (BA) (acrylic acid ester monomer), 8.75 parts by mass of styrene (St) (additional monofunctional monomer), 0.3 parts by mass of allyl methacrylate (ALMA) (polyfunctional monomer), and 0.25 parts by mass of a surfactant (Adeka Col CS-141E, produced by Adeka Corporation) was added dropwise through a dropping funnel over a period of 60 minutes to form the first layer (layer (Ia)). After completion of the dropwise addition, the reaction was further continued at 80°C for 1 hour, and gas chromatography was performed to confirm the consumption of at least 99% of each monomer.

Subsequently, 0.02 parts by mass of potassium peroxodisulfate 3% aqueous solution was added to the obtained copolymer latex, and then a mixture formed of 15.81 parts by mass of n-butyl acrylate (BA) (acrylic acid ester monomer), 3.19 parts by mass of styrene (St) (additional monofunctional monomer), 1.0 part by mass of methyl methacrylate (MMA) (additional monofunctional monomer), 0.16 parts by mass of allyl methacrylate (ALMA) (polyfunctional monomer), and 0.1 parts by mass of a surfactant (Adeka Col CS-141E) was added dropwise through a dropping funnel over a period of 40 minutes to form the second layer (layer (Ib)). After completion of the dropwise addition, the reaction was further continued at 80°C for 1 hour, and gas chromatography was performed to confirm the consumption of at least 99% of each monomer.

Subsequently, 0.03 parts by mass of potassium peroxodisulfate 3% aqueous solution was added to the obtained copolymer latex, and then a mixture formed of 28.5 parts by mass of methyl methacrylate (MMA) (methacrylic acid ester monomer), 1.5 parts by mass of methyl acrylate (MA) (additional monomer), 0.3 parts by mass of n-octyl mercaptan, and 0.15 parts by mass of a surfactant (Adeka Col CS-141E) was added dropwise through a dropping funnel over a period of 40 minutes to form the third layer (layer (II)). After completion of the dropwise addition, the reaction was further continued at 80°C for 1 hour, and the polymerization was terminated after gas chromatography was performed to confirm the consumption of at least 99.9% of each monomer. The average particle size, measured by a light scattering method, of particles in the obtained latex was 100 nm.

After the obtained latex was cooled at -30°C for 24 hours to freeze and aggregate, the aggregate was melted and taken out. Drying was performed under reduced pressure at 50°C for 2 days to obtain multilayered polymer particles (B-1) having a three-layer structure in a powder form. The number average molecular weight (Mn) of the polymer component constituting the outermost layer was 25,000. Table 1 shows the particle structure. The "layer ratio" indicates the mass ratio of the three layers, i.e., the first, second, and third layers.

### Production Example 2: Multilayered Polymer Particles (B-2)

200 parts by mass of distilled water, 1.3 parts by mass of an emulsifier (Neopelex G-15, produced by Kao Corporation), and 0.05 parts by mass of sodium carbonate were placed in a polymerizer equipped with a stirring blade, a cooling tube, and a dropping funnel in a nitrogen atmosphere, and heated to 80°C to homogeneously dissolve these materials. Subsequently, 0.01 parts by mass of potassium peroxodisulfate 3% aqueous solution was added at the same temperature, and then a mixture formed of 2.52 parts by mass of n-butyl acrylate (BA) (acrylic acid ester monomer), 2.52 parts by mass of methyl methacrylate (MMA) (additional monofunctional monomer), and 0.01 parts by mass of allyl methacrylate (ALMA) (polyfunctional monomer) was added dropwise through a dropping funnel over a period of 30 minutes to form the first layer (layer (Ia)). After completion of the dropwise addition, the reaction was further continued at 80°C for 30 minutes, and gas chromatography was performed to confirm the consumption of at least 99% of each monomer.

Subsequently, 0.09 parts by mass of potassium peroxodisulfate 3% aqueous solution was added to the obtained copolymer latex, and then a mixture formed of 28.50 parts by mass of n-butyl acrylate (BA) (acrylic acid ester monomer), 1.52 parts by mass of methyl methacrylate (MMA) (additional monofunctional monomer), and 0.9 parts by mass of allyl methacrylate (ALMA) (polyfunctional monomer) was added dropwise through a dropping funnel over a period of 50 minutes to form the second layer (layer (Ib)). After completion of the dropwise addition, the reaction was further continued at 80°C for 30 minutes, and gas chromatography was performed to confirm the consumption of at least 99% of each monomer.

Subsequently, a mixture formed of 56.82 parts by mass of methyl methacrylate (MMA) (methacrylic acid ester monomer), 8.12 parts by mass of n-butyl acrylate (BA) (additional monomer), and 0.19 parts by mass of n-octyl mercaptan was added dropwise through a dropping funnel over a period of 100 minutes to form the third layer (layer (II)). After completion of the dropwise addition, the reaction was further continued at 80°C for 1 hour, and the polymerization was terminated after gas chromatography was performed to confirm the consumption of at least 99.9% of each monomer. The average particle size, measured by a light scattering method, of particles in the obtained latex was 100 nm.

After the latex was cooled at -30°C for 24 hours to freeze and aggregate, the aggregate was melted and taken out. Drying was performed under reduced pressure at 50°C for 2 days to obtain multilayered polymer particles (B-2) having a three-layer structure in a powder form. The number average molecular weight (Mn) of the polymer component constituting the outermost layer was 33,000. Table 1 shows the particle structure.

### Production Example 3: Multilayered Polymer Particles (B-3)

100 parts by mass of distilled water, 0.02 parts by mass of an emulsifier (Nikkol ECT-3NEX, produced by Nikko Chemicals Co., Ltd.), and 0.1 parts by mass of sodium carbonate were placed in a polymerizer equipped with a stirring blade, a cooling tube, and a dropping funnel in a nitrogen atmosphere, and heated to 80°C to homogeneously dissolve these materials. Subsequently, 0.035 parts by mass of potassium peroxodisulfate 3% aqueous solution was added at the same temperature, and then a mixture formed of 2.11 parts by mass of methyl acrylate (MA) (acrylic acid ester monomer), 32.89 parts by mass of methyl methacrylate (MMA) (additional monofunctional monomer), 0.07 parts by mass of allyl methacrylate (ALMA) (polyfunctional monomer), and 0.25 parts by mass of an emulsifier (Nikkol ECT-3NEX, produced by Nikko Chemicals Co., Ltd.) was added dropwise through a dropping funnel over a period of 60 minutes to form the first layer (layer (la)). After completion of the dropwise addition, the reaction was further continued at 80°C for 40 minutes, and gas chromatography was performed to confirm the consumption of at least 99% of each monomer.

Subsequently, 0.045 parts by mass of potassium peroxodisulfate 3% aqueous solution was added to the obtained copolymer latex, and then a mixture formed of 37.0 parts by mass of n-butyl acrylate (BA) (acrylic acid ester monomer), 8.0 parts by mass of styrene (St) (additional monofunctional monomer), 0.9 parts by mass of allyl methacrylate (ALMA) (polyfunctional monomer), and 0.12 parts by mass of an emulsifier (Nikkol ECT-3NEX, produced by Nikko Chemicals Co., Ltd.) was added dropwise through a dropping funnel over a period of 70 minutes to form the second layer (layer (Ib)). After completion of the dropwise addition, the reaction was further continued at 80°C for 90 minutes, and gas chromatography was performed to confirm the consumption of at least 99% of each monomer.

Subsequently, 0.02 parts by mass of potassium peroxodisulfate 3% aqueous solution was added to the obtained copolymer latex, and then a mixture formed of 18.80 parts by mass of methyl methacrylate (MMA) (methacrylic acid ester monomer), 1.2 parts by mass of methyl acrylate (MA) (additional monomer), and 0.04 parts by mass of n-octyl mercaptan was added dropwise through a dropping funnel over a period of 30 minutes to form the third layer (layer (II)). After completion of the dropwise addition, the reaction was further continued at 80°C for 40 minutes, and the polymerization was terminated after gas chromatography was performed to confirm the consumption of at least 99.9% of each monomer. The average particle size, measured by a light scattering method, of particles in the obtained latex was 230 nm.

After the latex was cooled at -30°C for 24 hours to freeze and aggregate, the aggregate was melted and taken out. Drying was performed under reduced pressure at 50°C for 2 days to obtain multilayered polymer particles (B-3) having a three-layer structure in a powder form. The number average molecular weight (Mn) of the polymer component constituting the outermost layer was 31,000. Table 1 shows the particle structures.

**Table 1**

| | | Production Example 1 | Production Example 2 | Production Example 3 |
|---|---|---|---|---|
| | | Multilayered polymer particles (B-1) | Multilayered polymer particles (B-2) | Multilayered polymer particles (B-3) |
| Layer composition | First layer (rubber component layer (Ia)) [mass ratio] | BA/St/ALMA (82.5/17.5/0.6) | BA/MMA/ALMA (50.0/50.0/0.02) | MMA/MA/ALMA (94.0/6.0/0.2) |
| | Second layer (rubber component layer (Ib)) [mass ratio] | BA/St/MMA/ALMA (79.0/16.0/5.0/0.8) | BA/MMA/ALMA (95.0/5.0/3.0) | BA/St/ALMA (82.0/18.0/2.0) |
| | Third layer (thermoplastic resin component layer (II)) [mass ratio] | MMA/MA (95.0/5.0) | MMA/BA (87.5/12.5) | MMA/MA (94.0/6.0) |
| Layer ratio [mass ratio] | | 50/20/30 | 5/30/65 | 35/45/20 |
| Number average molecular weight Mn of outermost layer | | 25000 | 33000 | 31000 |
| Average particle size [nm] | | 100 | 100 | 230 |

### Examples 1 to 6

The polyurethane thermoplastic elastomer (A-1) or (A-2) and the multilayered polymer particles (B-1) obtained in Production Example 1 were melt-kneaded with a twin-screw extruder (diameter: 20 mm) at a cylinder temperature of 200°C at the ratio shown in Table 2, and the melt-kneaded product was then extruded to obtain a polyurethane resin composition in the form of pellets. The film extrusion temperature conditions were a cylinder temperature of 190°C and a T-die temperature of 200°C. Table 2 shows the composition of each polyurethane resin composition and the evaluation results of the physical properties.

### Comparative Examples 1 and 2

70 parts by mass of the polyurethane thermoplastic elastomer (A-1) and 30 parts by mass of the multilayered polymer particles (B-2) or (B-3) respectively obtained in Production Example 2 or 3 were melt-kneaded with a twin-screw extruder (diameter: 20 mm) at a cylinder temperature of 200°C, and the melt-kneaded product was then extruded to obtain a polyurethane resin composition in the form of pellets. The film extrusion temperature conditions were a cylinder temperature of 190°C and a T-die temperature of 200°C. Table 2 shows the composition of each polyurethane resin composition and the evaluation results of the physical properties.

### Comparative Examples 3 and 4

100 parts by mass of the polyurethane thermoplastic elastomer (A-1) or (A-2) was melt-kneaded with a twin-screw extruder (diameter: 20 mm) at a cylinder temperature of 200°C, and the melt-kneaded product was then extruded to obtain a polyurethane resin composition in the form of pellets. The film extrusion temperature conditions were a cylinder temperature of 190°C and a T-die temperature of 200°C. Table 2 shows the composition of each polyurethane resin composition and the evaluation results of the physical properties.

**Table 2**

| | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 |
|---|---|---|---|---|---|---|---|---|---|---|---|
| Mixing ratio [wt%] | Polyurethane thermoplastic elastomer (A-1) | 90 | | 70 | | 30 | | 70 | 70 | 100 | |
| | Polyurethane thermoplastic elastomer (A-2) | | 90 | | 70 | | 30 | | | | 100 |
| | Multilayered polymer particles (B-1) | 10 | 10 | 30 | 30 | 70 | 70 | | | | |
| | Multilayered polymer particles (B-2) | | | | | | | 30 | | | |
| | Multilayered polymer particles (B-3) | | | | | | | | 30 | | |
| Melt viscosity of resin composition at 180°C [η (180°C)] (Pa·s) | | 1600 | 2400 | 1360 | 2130 | 1220 | 1900 | 1360 | 1770 | 1690 | 3070 |
| Melt viscosity of resin composition at 200°C [η (200°C)] (Pa·s) | | 440 | 420 | 490 | 530 | 440 | 480 | 290 | 380 | 400 | 370 |
| Melt viscosity ratio at 180°C [η(A)/η (180°C)] (-) | | 1.1 | 1.3 | 1.2 | 1.4 | 1.4 | 1.6 | 1.2 | 1.0 | 1.0 | 1.0 |
| Melt viscosity ratio at 200°C [η(A)/η (200°C)] (-) | | 0.9 | 0.9 | 0.8 | 0.7 | 0.9 | 0.8 | 1.4 | 1.1 | 1.0 | 1.0 |
| Shore A hardness (-) | | 79 | 86 | 70 | 75 | 67 | 68 | 77 | 83 | 84 | 91 |
| Tensile elongation (%) | | 610 | 530 | 650 | 550 | 300 | 280 | 420 | 200 | 590 | 520 |
| Moldability (drawdown) | | Pass | Pass | Pass | Pass | Pass | Pass | Fail | Fail | Fail | Fail |
| Occurrence of die drool | | B | A | A | A | A | A | B | B | C | C |
| Film appearance | | Pass | Pass | Pass | Pass | Pass | Pass | Fail | Fail | Fail | Fail |

The polyurethane resin compositions of Examples 1 to 6 of the present invention, which contain the thermoplastic polyurethane elastomer (A) having a specific melt viscosity range and the multilayered polymer particles (B-1), have a specific melt viscosity range suitable for extrusion molding. Therefore, moldability (suppression of drawdown and draw resonance) during extrusion was excellent, no die line or melt fracture occurred, the film appearance was good. No die drool occurred because molding was possible at an appropriate extrusion temperature at which thermal degradation did not occur. In particular, the polyurethane resin compositions of Examples 1 to 4 of the present invention, which had a high composition ratio of the thermoplastic polyurethane elastomer (A), showed tensile elongation at break and hardness equivalent to those of the thermoplastic polyurethane elastomer. It was confirmed that excellent mechanical performance and flexibility, which are characteristics of the thermoplastic polyurethane elastomer, were retained.

In contrast, in the polyurethane resin compositions of Comparative Examples 1 and 2, which contained the thermoplastic polyurethane elastomer (A) having a specific melt viscosity range and the multilayered polymer particles (B-2) or (B-3), the viscosity significantly decreased at a high temperature, drawdown occurred, and film appearance defects such as melt fracture occurred. Furthermore, the tensile elongation at break was reduced, and the mechanical performance was poor. In addition, regarding the thermoplastic polyurethane elastomer (A) alone of Comparative Examples 3 and 4, which had a specific melt viscosity range, the melt viscosity was highly temperature-dependent; thus, extrusion moldability was poor, molding was difficult, film appearance defects due to the occurrence of die line and melt fracture were confirmed, and die drool occurred.

### Industrial Applicability

The present invention provides a polyurethane resin composition that retains the mechanical characteristics and flexibility of a thermoplastic polyurethane elastomer and that is excellent in extrusion moldability. A molded article, film, or sheet obtained by molding the composition is suitably used for soft members, such as interior or exterior materials for automobiles, home appliance members, electric wire coatings, medical members, miscellaneous goods, footwear, and transportation belts. In addition, the polyurethane resin composition of the present invention is also excellent in adhesiveness to other resins, and thus can also be used as a soft layer of a laminate or a soft layer member of a composite molded article.

## Claims

1. A polyurethane resin composition comprising 20 to 99 parts by mass of a thermoplastic polyurethane elastomer (A) and 1 to 80 parts by mass of multilayered polymer particles (B), the multilayered polymer particles (B) satisfying the following conditions (1) to (6):
(1) the multilayered polymer particles (B) comprise two or more layers having at least one rubber component layer (I) inside and at least one thermoplastic resin component layer (II) in an outermost part,
(2) the rubber component layer (I) is a polymer layer formed by copolymerizing a monomer mixture (i) comprising 50 to 99.99 mass% of an acrylic acid ester, 49.99 to 0 mass% of an additional monofunctional monomer copolymerizable with the acrylic acid ester, and 0.01 to 10 mass% of a polyfunctional monomer,
(3) the thermoplastic resin component layer (II) is a polymer layer formed by polymerizing a monomer (ii) comprising 40 to 100 mass% of a methacrylic acid ester and 60 to 0 mass% of an additional monomer copolymerizable with the methacrylic acid ester,
(4) of the thermoplastic resin component layer (II), a polymer of the outermost layer has a number average molecular weight measured by a GPC method of 30,000 or less,
(5) the total mass ratio [(I)/(II)] of the rubber component layer (I) to the thermoplastic resin component layer (II) is 30/70 to 90/10, and
(6) the multilayered polymer particles (B) have an average particle size of 150 nm or less; and
the melt viscosity ratio ηr of the melt viscosity η(A) of the thermoplastic polyurethane elastomer (A) at a shear rate of 121.6 sec⁻¹ to the melt viscosity η of the polyurethane resin composition at a shear rate of 121.6 sec⁻¹ satisfying the following relationships:
melt viscosity ratio ηr (180°C) at 180°C: η(A)/η>1.0
melt viscosity ratio ηr (200°C) at 200°C: η(A)/η≤1.0

2. The polyurethane resin composition according to claim 1, wherein the polyurethane resin composition comprises 60 to 99 parts by mass of the thermoplastic polyurethane elastomer (A) and 1 to 40 parts by mass of the multilayered polymer particles (B).

3. The polyurethane resin composition according to claim 1 or 2, which has a Shore A hardness of 60 to 95 measured by a method according to JIS K 6253.

4. The polyurethane resin composition according to any one of claims 1 to 3, which is a resin composition for extrusion molding.

5. The polyurethane resin composition according to any one of claims 1 to 3, which is a resin composition for film extrusion.

6. A method for producing the polyurethane resin composition according to any one of claims 1 to 3, the method comprising producing the multilayered polymer particles (B) by the following steps:
a polymerization reaction step (S1) of forming at least one rubber component layer (I) inside by copolymerizing a monomer mixture (i) comprising 50 to 99.99 mass% of an acrylic acid ester, 49.99 to 0 mass% of an additional monofunctional monomer copolymerizable with the acrylic acid ester, and 0.01 to 10 mass% of a polyfunctional monomer; and
a polymerization reaction step (S2) of forming at least one thermoplastic resin component layer (II) in at least an outermost part by polymerizing a monomer (ii) comprising 40 to 100 mass% of a methacrylic acid ester and 60 to 0 mass% of an additional monomer copolymerizable with the methacrylic acid ester;
in the polymerization reaction step (S2), the number average molecular weight of a constituent copolymer of the thermoplastic resin component layer (II) constituting at least the outermost part being 30,000 or less as measured by a GPC method,
the weight ratio ((i)/(ii)) of the total amount of the monomer mixture (i) to the total amount of the monomer mixture (ii) being within the range of 30/70 to 90/10, and
the produced multilayered polymer particles (B) having an average particle size of 150 nm or less.

7. A method for producing an extrusion molded article comprising the polyurethane resin composition according to any one of claims 1 to 3, the method comprising extruding the polyurethane resin composition at a temperature at which a molten resin temperature in a die during extrusion is 200°C or more.

8. A method for producing a film comprising the polyurethane resin composition according to any one of claims 1 to 3, the method comprising subjecting the polyurethane resin composition to film extrusion at a temperature at which a molten resin temperature in a T-die during extrusion is 200°C or more.
